# EUROPÄISCHE PATENTSCHRIFT

(11) **EP 0 714 459 B1**
(45) Veröffentlichungstag und Bekanntmachung des Hinweises auf die Patenterteilung: **23.10.1996**
(21) Anmeldenummer: 95921649.0
(22) Anmeldetag: 26.06.1995
(51) Int. Cl.: D01D 1/09, B29C 47/92, D01F 2/00, C08J 5/18

(54) **VORRICHTUNG UND ANLAGE ZUR VERWENDUNG BEI DER VERARBEITUNG VON CELLULOSELÖSUNGEN**
APPARATUS AND PLANT FOR PROCESSING CELLULOSE SOLUTIONS
DISPOSITIF ET INSTALLATION POUR LE TRAITEMENT DE SOLUTIONS DE CELLULOSE

(30) Priorität: 10.08.1994 AT 1560/94
(43) Veröffentlichungstag der Anmeldung: 05.06.1996
(73) Patentinhaber: LENZING AKTIENGESELLSCHAFT, 4860 Lenzing (AT)
(72) Erfinder: ZIKELI, Stefan, A-4844 Regau (AT); ECKER, Friedrich, A-4850 Timelkam (AT); RAUCH, Ernst, A-4861 Schörfling (AT); NIGSCH, Arnold, A-6713 Ludesch (AT)
(74) Vertreter: Schwarz, Albin, Dr. Kopecky & Schwarz Patentanwälte
(86) Internationale Anmeldenummer: AT9500132
(87) Internationale Veröffentlichungsnummer: WO9605338

## Beschreibung

Die vorliegende Erfindung betrifft eine Vorrichtung zum Regeln des Drucks in einer strömenden, viskosen Masse, sowie eine Anlage zur Herstellung cellulosischer Formkörper. Die vorliegende Erfindung betrifft insbesondere eine Vorrichtung zum Regeln des Drucks einer strömenden, hochviskosen Celluloselösung, wie sie z.B. eine formbare Lösung von Cellulose in einem tertiären Aminoxid darstellt, die von einem Lösungsherstellungsaggregat zu einem Formwerkzeug transportiert wird.

Um Fasern, Folien oder andere geformte Gegenstände kontinuierlich und in gleichbleibend guter Qualität aus einem Ausgangsmaterial, z.B einer Polymerlösung oder einem thermoplastischen Kunststoff, herzustellen, ist es nicht nur notwendig, daß sich die chemisch/physikalischen Eigenschaften des Ausgangsmaterials nicht ändern, sondern auch, daß am Formwerkzeug, also an der Spinndüse oder am Folienextrusionskopf, stets die gleichen Bedingungen herrschen. Dabei kommt der Gleichmäßigkeit des Spinndruckes eine große Bedeutung zu. Im Normalbetrieb einer großtechnischen Anlage wird diese Bedingung zwar erfüllt sein, wird jedoch in bestimmten Situationen Ausgangsmaterial abgezweigt, bevor es das Formwerkzeug erreicht, z.B. beim Rückspülen eines Filters oder für einen anderen Zweck, fällt der Spinndruck naturgemäß ab. In diesem Fall muß durch geeignete Vorrichtungen dafür gesorgt werden, daß das abgezweigte Ausgangsmaterial kompensiert wird, um den Druck nicht abfallen zu lassen. Eine derartige Vorrichtung ist beispielsweise aus der AT-B 397 043 bekannt, die weiter unten näher beschrieben wird.

Andererseits kann die Situation auftreten, daß z.B. für einen Wechsel des Formwerkzeugs der Zustrom an Ausgangsmaterial an das Formwerkzeug überhaupt unterbrochen werden muß. Eine derartige Unterbrechung sollte jedoch nicht auf die Herstellung des Ausgangsmaterials durchschlagen, da bei einem Stoppen und erneutem Anfahren des Herstellungsprozesses die Gefahr besteht, daß vorübergehend eine gleichbleibende Qualität des Ausgangsmaterials nicht gewährleistet werden kann. Um das kontinuierliche Herstellen von Ausgangsmaterial nicht unterbrechen zu müssen, ist es daher notwendig, eine Art Reservoir vorzusehen, welches das Ausgangsmaterial, das in jener Zeitspanne hergestellt wird, in der kein Ausgangsmaterial vom Formwerkzeug verarbeitet werden kann, aufnehmen kann. Eine derartige Vorrichtung ist aus der unten ausführlicher beschriebenen WO 94/02408 bekannt.

Aus der GB-A - 841,403 ist eine Vorrichtung bekannt, mit welcher ein viskoses Material, zum Beispiel Margarine, intermittierend abgegeben werden kann. Diese Vorrichtung besitzt einen zylindrischen Vorratsraum, in welchem sich ein Kolben bewegt und die Margarine portionsweise abgibt. Die Margarine wird in den Vorratsraum in Richtung gegen die Stirnseite des Kolbens gedrückt, dabei umgelenkt und in Gegenrichtung intermittierend abgegeben. Es wird nicht erwähnt, ob sich diese Vorrichtung auch zum kontinuierlichen Abgeben eines hochviskosen Materials eignet.

Aus der DE-A - 3 416 899 ist eine Dekoriermaschine bekannt, mit der z.B. eine Schokoladenmasse auf Kekse gespritzt werden kann. Zwischen den Spritzdüsen einerseits und einer Pumpe für die Schokoladenmasse andererseits ist ein Zylinder zwischengeschaltet, auf dessen Kolben ein Druckluftzylinder wirkt. Hierdurch wird erreicht, daß die Schokoladenmasse unabhängig durch von der Pumpe bewirkte Druckschwankungen gleichförmig aus der Spritzdüse austritt.

In manchen Fällen wird an die Vorrichtung zum Regeln der Stärke eines Masseflusses und zum Ausgleichen von Druckschwankungen in einer strömenden, hochviskosen Masse aber auch noch eine andere Forderung gestellt: sie darf keine Toträume aufweisen, in denen sich Ausgangsmaterial ansammeln kann. Ein Lösung für dieses Problem ist aus der DE-A-1 914 909 bekannt, welche eine Vorrichtung nach dem Oberbegriff des Anspruchs 1 beschreibt. Dies gilt insbesondere dann, wenn sich die Eigenschaften des Ausgangsmaterial mit der Zeit ändern. Viskose Polymerlösungen oder thermoplastische Massen eines oder mehrerer Polymere müssen in der Regel bei erhöhter Temperatur verarbeitet werden. Dabei kann es vorkommen, daß das Polymer bei dieser erhöhten Temperatur nur unzureichend stabil ist und Abbaureaktionen unterliegt. Diese Abbaureaktionen können u.U. sogar explosionshaft verlaufen und stellen dann ein Sicherheitsrisiko dar. Diese Problematik wird im folgenden am Beispiel von Lösungen von Cellulose in tertiären Aminoxiden näher beschrieben. Für eine allgemeine Beschreibung der Herstellung von Lösungen von Cellulose in wässerigen tertiären Aminoxiden wird auf die US-PS 4,196,282 verwiesen. Im folgenden wird für die Bezeichnung "tertiäre Aminoxide" stellvertretend "NMMO" (= N-Methylmorpholin-N-oxid) verwendet.

Wird Cellulose in NMMO gelöst, so kommt es zu einem teilweisen Abbau der polymeren Cellulosekette. Dieser teilweise Abbau wirkt sich auf die Spinnsicherheit und auf gewisse Eigenschaften der Endprodukte nachteilig aus, wie z.B. auf die Festigkeit von Fasern, ihre Dehnung und ihre Schlingenfestigkeit.

Weiters ist bekannt, daß sich die Celluloselösungen infolge eines Abbaues des verwendeten Aminoxids mit der Zeit immer mehr verfärben. Das Monohydrat von NMMO liegt beispielsweise unter Normalbedingungen als weißer kristalliner Feststoff vor, der bei 72°C schmilzt. Beim Erhitzen des Monohydrates tritt ab 120/130°C eine starke Verfärbung auf. Ab 175°C wird eine exotherme Reaktion unter vollständiger Entwässerung der Schmelze und heftiger Gasentwicklung mit explosionshaftem Verlauf ausgelöst, wobei Temperaturen weit über 250°C erreicht werden. Es ist bekannt, daß metallisches Eisen und Kupfer sowie insbesondere deren Salze, die Zersetzungstemperaturen von NMMO beträchtlich herabsetzen, wobei sich gleichzeitig die Zersetzungsgeschwindigkeit erhöht.

Zu den oben genannten Problemen tritt noch ein weiteres: die thermische Instabilität der NMMO-Cellulose-Lösungen selbst. Darunter ist zu verstehen, daß in den Lösungen bei den erhöhten Temperaturen der Verarbeitung (etwa 110-120°C) unkontrollierbare Zersetzungsprozesse ausgelöst werden, die unter Entwicklung von Gasen zu heftigen Verpuffungen, Bränden und sogar zu Explosionen führen können.

Über die Zusammenhänge der thermisch instabile Natur der Lösung, also des Extrusionsgemisches, ist in der Literatur nur wenig bekannt. Insbesondere bei Anwesenheit von Metallionen können in bestimmten Fällen die Zersetzungsreaktionen in der Spinnmasse durchgehen. Metallionen sind aber in der Lösung aufgrund des metallischen Aufbaues der Anlagenteile, die zweckmäßigerweise aus Edelstahl gebaut sind, nie auszuschließen.

Bis heute ist in der Literatur keine Stabilisierungsmaßnahme beschrieben worden, die sowohl Cellulose und NMMO ausreichend stabilisiert als auch gleichzeitig die thermische Instabilität der Cellulose-NMMO-Lösung so deutlich herabsetzt, daß der explosionshafte Zerfall unter Prozeßbedingungen verhindert werden kann. Es liegt auf der Hand, daß gerade die thermische Instabilität erhitzter Spinnmassen problematisch ist, da diese Spinnmassen in Anlagenteilen mit größerem Volumen, wie z.B. Puffergefäßen, Rührkesseln, Mischern, oder dgl., ein Sicherheitsrisiko darstellen.

Um die Explosionsgefahr im Stadium der Lösungsherstellung zu bannen und die thermische Belastung der Lösung gering zu halten, ist aus der EP-A - 0 356 419 bekannt, die Lösung statt in einem Rührkessel oder dergleichen in einem Dünnschichtbehandlungsapparat zu bereiten. Im Laufe dieses Verfahrens wird die Suspension der Cellulose im NMMO, das einen Wassergehalt von bis zu 40% aufweisen kann, über die Heizfläche des Dünnschichtbehandlungsapparats schichtartig ausgebreitet und transportiert und dabei erhöhter Temperatur und vermindertem Druck ausgesetzt, um Wasser abzuziehen, bis die Cellulose in Lösung geht. Dies ermöglicht auf kostengünstige Weise eine rasche Erwärmung der Suspension auf die zur Lösungsherstellung erforderlichen Temperaturen und zugleich eine rasche Lösungsbereitung, sodaß eine Zersetzung des tertiären Aminoxides und ein Abbau der Cellulose weitgehend verhindert werden können. Außerdem ist das Sicherheitsrisiko verglichen mit der Lösungsbereitung im Rührkessel wesentlich geringer, da nicht eine große Lösungsmittelmenge auf einmal erhitzt wird, sondern immer nur eine vergleichsweise geringe Menge.

Das in der EP-A - 0 356 419 beschriebene Verfahren senkt somit durch technische Maßnahmen das Sicherheitsrisiko während der Herstellung der Celluloselösung. Damit besteht aber immer noch die Möglichkeit des Cellulose- und NMMO-Abbaus und von Exothermien, Verpuffungen, etc. bei der Verarbeitung der fertigen Lösungen, also in denjenigen Anlagenteilen, die zwischen Dünnschichtbehandlungsapparat und Formwerkzeug geschaltet sind. Derartige Anlagenteile sind zum Beispiel Puffer- oder Vorratsbehälter, die beispielsweise zwischen einer rückspülfähigen Filtervorrichtung und das Formwerkzeug geschaltet sind, um Diskontinuitäten im Spinnmassefluß zur Spinnmaschine bei Filterwechsel oder bei Rückspülung möglichst zu vermeiden.

Wie bereits oben erwähnt wurde, ist aus der AT-B 397 043 eine derartige rückspülfähige Filtervorrichtung mit angeschlossenem Vorratsbehälter bekannt. Diese Vorrichtung wurde für thermoplastisches Kunststoffmaterial entwickelt und hat ein Gehäuse, in welchem zwei Siebträgerkörper zwischen einer Betriebsstellung und einer Rückspülstellung verschiebbar gelagert sind. In der Rückspülstellung steht das rückzuspülende Siebnest mit seiner Abstromseite mit der Abstromseite des weiter in Betriebsstellung befindlichen Siebnestes in Verbindung. An den gemeinsamen Abströmkanal, der zur Spinnmaschine führt, ist in T-Form ein enger, zylindrischer Vorratsraum angeschlossen, in welchem ein Kolben geführt ist. Vor Beginn des Rückspülvorganges wird der Kolben langsam zurückgezogen, wodurch Kunststoffmaterial aus dem Abströmkanal langsam abgezweigt wird. Das Abzweigen von Kunststoffmaterial soll so langsam erfolgen, daß kein signifikanter Druckabfall an der Spinnmaschine auftritt. Wenn der Vorratsbehälter mit Schmelze gefüllt ist, wird der das rückzuspülende Siebnest tragende Siebträgerkörper in die Rückspülstellung übergeführt und die Rückspülung durch Vorschub des Kolbens so durchgeführt, daß der Druck an der Spinnmaschine zumindest annähernd konstant gehalten wird.

Diese vorbekannte Vorrichtung besitzt den Nachteil, daß sie einen rasch auftretenden Druckabfall in den Abströmkanälen nur dann sofort kompensieren kann, wenn sich im zylindrischen Vorratsraum stets eine gewisse Menge Kunststoffmaterial als Vorrat befindet, der bei Bedarf vom Kolben sofort in den Abströmkanal abgegeben werden kann. Dieses Vorratsmaterial verbleibt naturgemäß Stunden im zylindrischen Vorratsraum und unterliegt während dieser Zeit den verschiedensten Abbaureaktionen, die an der Cellulose und am NMMO stattfinden. Diese Abbauprodukte verunreinigen die Spinnmasse. Außerdem steht dieses Vorratsmaterial während seines Verbleibs im zylindrischen Vorratsraum mit einer relativ großen metallischen Oberfläche in Kontakt, da das Längen/Breiten-Verhältnis des Vorratsraumes hoch ist. Dadurch wird ein Anreichern von Metallionen an der Grenzfläche zur Celluloselösung begünstigt. Diese Metallionen können zu einem thermischen Durchgehen der Zersetzungsreaktionen bis hin zur explosionshaften Zersetzung führen.

Die WO 94/02408 betrifft ein Verfahren zum Speichern eines flüssigen, hochviskosen Mediums in einem Tank, dessen Fassungsvermögen einstellbar ist. Dieser Speichertank ist für formbare Lösungen von Cellulose in tertiären Aminoxiden aus zwei Gründen nachteilig. Zum einen sollte in einem kontinuierlichen Verfahren zur Herstellung cellulosischer Gegenstände vermieden werden, das Ausgangsmaterial, also die thermisch instabile Celluloselösung, überhaupt in einem Tank zu speichern. Wie oben bereits erwähnt wurde, unterliegen die Cellulose und das tertiäre Aminoxid während der Standzeiten der Celluloselösung einem Abbau, dessen Produkte die Qualität der Formkörper beeinträchtigen. Zum zweiten ist in dem vorgeschlagenen Tank aufgrund seines komplexen Aufbaues ein gleichmäßiges Durchströmen der hochviskosen Lösung nicht gewährleistet. Als Folge davon bildet sich ein Strömungsprofil mit Bereichen, in denen ein Teil der Celluloselösung schneller fließt als andere Teilen.

Wird der in der WO 94/02408 beschriebene Tank für hochviskose Celluloselösungen eingesetzt, so ist dieses Strömungsprofil derart stark ausgeprägt, daß die Celluloselösung an einigen Stellen nur noch sehr langsam oder überhaupt nicht mehr strömt. Dies ist nachteilig, weil sich nicht nur die Verweilzeit der thermisch instabilen Lösung erhöht, sondern auch weil sich Celluloselösung an einigen Stellen, sogenannten Toträumen, ansammelt, sich dort aufgrund des Kontaktes mit metallischen Oberflächen mit Metallionen anreichert, wodurch die Gefahr für heftige Zersetzungsreaktionen steigt.

Eine Vorrichtung zum Regeln des Druckes in einer strömenden, hochviskosen Cellulose sollte idealerweise vielmehr so beschaffen sein, daß die Lösung beim Durchströmen der Vorrichtung sozusagen als Pfropfen gleichmäßig weitertransportiert und ihr somit kein Strömungsprofil verliehen wird.

Es ist somit die Aufgabe der vorliegenden Erfindung, eine Vorrichtung zum Regeln des Drucks in einer strömenden, viskosen Masse zur Verfügung zu stellen, welche folgende Bedingungen erfüllt:
1. die Vorrichtung muß auf einen Druckabfall sofort reagieren können, indem mit zusätzlichem Ausgangsmaterial kompensiert wird; dieses Ausgangsmaterial darf jedoch nicht vorher vom Hauptstrom abgezweigt worden sein, wie dies bei Vorrichtung gemäß der AT-B 397 043 der Fall ist;
2. die Vorrichtung sollte möglichst keinen Totraum aufweisen, in welchem sich Ausgangsmaterial ansammeln kann;
3. die Vorrichtung muß einfach aufgebaut sein und auf einfache Weise zu bedienen sein;
4. die Vorrichtung muß so gestaltet sein, daß die Verweilzeit des Ausgangsmaterials in der Vorrichtung möglichst gering ist, d.h., daß ein Strömungsprofil vermieden wird, gemäß welchem ein Teil der viskosen Masse wesentlich langsamer transportiert wird; und
5 die Vorrichtung muß so ausgestaltet sein, daß das Ausgangsmaterial mit möglichst wenig Metalloberfläche in Berührung kommt.

Die erfindungsgemäße Vorrichtung zum Regeln des Drucks in einer strömenden, viskosen Masse weist folgende Merkmale auf:
- einen Einlaß, durch welchen die Masse in die Vorrichtung strömt,
- ein Führungselement, welches eine Aufnahmekapazität für die aus dem Einlaß einströmende Masse besitzt,
- einen Kolben, welcher eine Öffnung aufweist und im Führungselement beweglich gelagert ist, wobei die Aufnahmekapazität des Führungselementes mit der Bewegung des Kolbens verändert wird,
- eine Aufnahme, welche an der Öffnung am Kolben befestigt ist und welche mit dem Einlaß verbunden ist, sodaß die strömende Masse vom Einlaß über die Aufnahme und durch die Öffnung des Kolbens in das Führungselement gelangt,
- einen Auslaß, in welchen das Führungselement mündet und mit welchem die strömende Masse aus der Vorrichtung abgegeben
wird, mit der Maßgabe, daß der Einlaß, das Führungselement und die Aufnahme rohrförmig ausgebildet sind und ist gekennzeichnet dadurch, daß sich die Aufnahme bei der Bewegung des Kolbens teleskopartig über den Einlaß schiebt.

Eine bevorzugte Ausführungsform der erfindungsgemäßen Vorrichtung besteht darin, daß der Kolben mit einem Statikmischer verbunden ist, welcher im Führungselement beweglich gelagert ist und sich zusammen mit dem Kolben bewegt.

Das Führungselement weist vorteilhaft einen Druckraum auf, in welchen über eine Öffnung ein Fluid, z.B. ein Gas oder ein Hydrauliköl, gespeist werden kann, welches unter Druck steht und den Kolben bewegen kann.

Es hat sich gezeigt, daß sich die erfindungsgemäße Vorrichtung besonders gut zur Verwendung bei der Verarbeitung von Celluloselösungen eignet. Die Erfindung betrifft somit auch die Verwendung der erfindungsgemäßen Vorrichtung bei der Verarbeitung formbarer Celluloselösungen, wobei als formbare Celluloselösung insbesondere eine Lösung von Cellulose in einem wässerigen NMMO eingesetzt werden kann.

Die Erfindung betrifft weiters eine Anlage zur Herstellung cellulosischer Formkörper, welche Anlage umfaßt:
- einen Mischer, in welchem aus zerkleinerter Cellulose und einer wässerigen Lösung eines tertiären Aminoxids eine Suspension gebildet wird,
- einen Dünnschichtbehandlungsaparat, welcher mit dem Mischer leitungsmäßig verbunden ist und in welchem unter Anwendung der Dünnschichttechnik bei erhöhter Temperatur und bei verringertem Druck aus der Suspension so lange Wasser abgedampft wird, bis eine Celluloselösung entstanden ist, welche aus dem Dünnschichtbehandlungsapparat ausgetragen wird,
- eine erfindungsgemäße Vorrichtung, welche mit dem Dünnschichtbehandlungsapparat entweder direkt oder indirekt leitungsmäßig verbunden ist, und
- ein Formwerkzeug, welches mit der erfindungsgemäßen Vorrichtung leitungsmäßig verbunden ist.

Es ist für den Fachmann klar, daß die einzelnen Teile der Anlage für einen kontinuierlichen Betrieb zueinander abgestimmt sein müssen. Der für die Lösungsherstellung verwendete Dünnschichtbehandlungsapparat ist naturgemäß auf die zu verarbeitende Suspensionsmenge hinsichtlich seiner Heizfläche entsprechend auszulegen.

Die erfindungsgemäße Anlage zeichnet sich dadurch aus, daß durch die Verwendung der erfindungsgemäßen Vorrichtung Störungen des gesamten Herstellungs- und Verarbeitungsprozesses vermieden werden können, die von Druckschwankungen in der strömenden Celluloselösung herrühren.

Die Anmelderin hat Studien über die Verweilzeiten der Suspensionsbestandteile und der Celluloselösung in den einzelnen Anlagenteilen durchgeführt und hat entdeckt, daß die erfindungsgemäße Vorrichtung eine im Vergleich zu herkömmlichen Puffer- und Speichertanks wesentlich verkürzte Verweilzeit bietet. Die erfindungsgemäße Vorrichtung ist dabei auf einfache Art und Weise verschiedenen Kapazitäten und Fördermengen einer Anlage, in welcher sie eingesetzt wird, anpaßbar. Eine Kombination eines Dünnschichtbehandlungsapparats mit der erfindungsgemäßen Vorrichtung ist dabei besonders vorteilhaft.

Die Auslegung der erfindungsgemäßen Vorrichtung hat sich am Durchsatz durch den Dünnschichtbehandlungsapparat zu orientieren, was, als Prozentsatz ausgedrückt, dem sogenannten "Hold-up" (= Strömungsquerschnitt der Filmzone über die Apparatelänge) des Dünnschichtbehandlungsapparats entspricht.

Eine bevorzugte Ausführungsform eines Dünnschichtbehandlungsapparates ist ein "Filmtruder" der Firma Buss AG, Schweiz. Der kleinste im Handel erhältliche Filmtruder hat eine Wärmeübertragungsfläche von 0,5 m², was gemäß der Firmenbeschreibung und den Ausführungen in der EP-A - 0 356 419 bzw. den dort beschriebenen Verfahrensparametern einen Massendurchsatz zwischen 64 und 72 kg/h erlaubt. Dies entspricht einer Spinnmasseabnahme von 128 - 144 kg/m²h. Bei diesem Filmtruder ist mit einem Hold-up von ca. 2 1 zu rechnen, was ca. 2% des Massedurchsatzes entspricht und sich als anzustrebendes Druckausgleichsvolumen der erfindungsgemäßen Vorrichtung in Kombination mit dem Filmtruder herausgestellt hat.

Weiters wurde gefunden, daß das anzustrebende Druckausgleichsvolumen der erfindungsgemäßen Vorrichtung für den Druckausgleich ca. 2-6% des Spinnmassedurchsatzes betragen soll, was dem Hold-up-Volumen des Filmtruders, d.h. dem Strömungsquerschnitt der Filmzone, entspricht. Demnach wird bei Verwendung eines großen Filmtruders mit 40 m² Heizfläche bei der Anpassung der erfindungsgemäßen Vorrichtung auf den Erfahrungen aus der EP-A - 0 356 419 aufgebaut, wobei ein spezifischer Massedurchsatz von 128-144 kg/m²h mit der Heizfläche von z.B. 40 m² multipliziert wird, wobei in der Folge ein Massedurchsatz von 5120-5760 kg/h durch diesen Filmtruder resultiert.

Das für diesen großen Filmtruder anzustrebende Volumen für die erfindungsgemäße Vorrichtung soll demnach zwischen 100 und 300 1 betragen, was wiederum dem Hold-up-Volumen des Filmtruders entspricht.

Durch die für den Fachmann vorauszusehende Festlegung des Länge/Durchmesser-Verhältnisses bei der erfindungsgemäßen Vorrichtung kann das notwendige Druckausgleichsvolumen kontruktiv und fertigungsmäßig auf einfache Weise untergebracht werden.

Die Erfindung betrifft daher ferner eine Anlage zur Herstellung formbarer Lösungen von Cellulose in wässerigen tertiären Aminoxiden, gekennzeichnet durch die Kombination
- eines Dünnschichtbehandlungsapparats, in welchem unter Anwendung der Dünnschichttechnik bei erhöhter Temperatur und bei verringertem Druck aus einer Suspension von Cellulose in einem wässerigen tertiären Aminoxid so lange Wasser abgedampft wird, bis eine Celluloselösung entstanden ist, welche aus dem Dünnschichtbehandlungsapparat ausgetragen wird, mit
- einer erfindungsgemäßen Vorrichtung welche mit dem Dünnschichtbehandlungsapparat entweder direkt oder indirekt leitungsmäßig verbunden ist.

Mit der Zeichnung wird die Erfindung noch näher erläutert, wobei die Figur 1 schematisch eine Anlage zur Herstellung von Cellulosefasern ausgehend von einer Suspension von zerkleinerter Cellulose in einem wässerigen NMMO zeigt und die Figuren 2 und 3 Ausführungsformen der erfindungsgemäßen Vorrichtung zeigen.

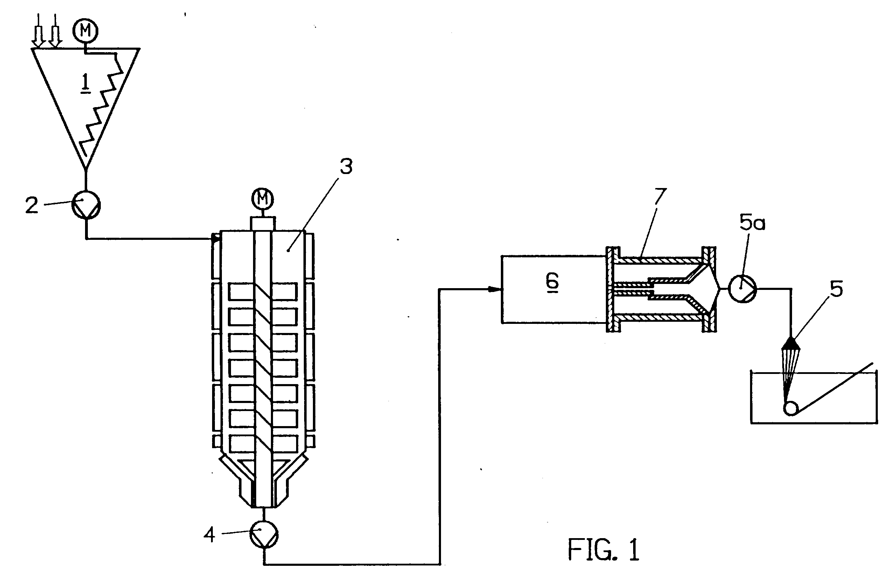

Figur 1 zeigt schematisch den Aufbau einer Ausführungsform der erfindungsgemäßen Anlage zur Herstellung einer formbaren Lösung von Cellulose in wässerigem NMMO, welche zu Fasern versponnen wird. Es wird darauf hingewiesen, daß die einzelnen Teile der Anlage aus Gründen der Übersichtlichkeit in der Figur nicht im gleichen Maßstab dargestellt sind.

In Fig. 1 ist mit 1 ein Mischer, beispielsweise ein Kegelmischer, bezeichnet, in den zerkleinerte Cellulose und eine wäßrige NMMO-Lösung gegeben werden. Ihre Zuführung ist mit zwei Pfeilen angedeutet. Im Kegelmischer 1 werden die Cellulose und die wäßrige NMMO-Lösung zu einer Suspension vermischt. Der Mischarm des Kegelmischers und der Antrieb des Mischarms ist mit einer Zick-Zack-Linie bzw. mit dem Buchstaben M dargestellt. Die erhaltene Suspension enthält zwischen 9 und 13 Masse-% Cellulose, zwischen 65 bzw. 63 Masse-% NMMO und als Rest Wasser.

Die Suspension wird mittels einer Pumpe 2 ausgetragen und in einen Filmtruder 3 gespeist, in welchem mittels der Dünnschichttechnik unter Anlegung eines Vakuums und bei erhöhter Temperatur so lange Wasser abgezogen wird, bis die Cellulose in Lösung geht. Diese Art der Herstellung der Celluloselösung ist in der EP-A - 0 356 419 der Anmelderin detailliert beschrieben, auf welche zur weiteren Information verwiesen wird. Dünnschichtbehandlungsapparate sind im Stand der Technik bekannt und werden u.a. von der Firma Buss AG, Schweiz, mit der Markenbezeichnung Filmtruder gebaut. Mittels einer Pumpe 4 wird die fertige Celluloselösung aus dem Filmtruder ausgetragen.

Mit der Bezugsziffer 6 ist allgemein ein Anlagenteil bezeichnet, der fakultativ vorgesehen sein kann und zu Druckschwankungen Anlaß geben kann. Dies kann beispielsweise eine Vorrichtung zum Einspeisen von Additiven sein, was aufgrund der Volumszunahme der strömenden Celluloselösung zu einem Druckanstieg an der Spinnpumpe 5a führt. Es kann aber auch eine Vorrichtung sein, mit welcher in gewissen Abständen ein Teil der zur Spinndüse 5 strömenden Celluloselösung für andere Zwecke abgezweigt wird. Dies ist z.B. bei einem Rückspülfilter, das üblicherweise vor einem Formwerkzeug angeordnet ist, oder bei Umschaltungen bei zwei parallel betriebenen Polymerschmelzefilterkerzen der Fall, wenn z.B. eine Filtereinheit zwecks Reinigung herausgenommen werden und auf die andere zur Aufrechterhaltung des Flusses umgeschaltet werden muß. Derartige Rückspülfilter sind dem Fachmann bekannt und beispielsweise in der EP-A - 0 572 369 der Anmelderin oder in der EP-A - 0 250 695 beschrieben.

Mit der Bezugsziffer 7 ist eine Ausführungsform der erfindungsgemäßen Vorrichtung bezeichnet, die im vorliegenden Fall an einen Anlagenteil 6 angeflanscht ist. Wird Celluloselösung im Anlagenteil 6 abgezweigt, so kann mit Hilfe der erfindungsgemäßen Vorrichtung 7 diese abgezweigte Menge Celluloselösung kompensiert werden, wodurch verhindert wird, daß der Druck an der Spinndüse 5 abfällt. Der Spinnvorgang braucht somit nicht unterbrochen werden und kann praktisch mit dem gleichen Druck weitergeführt werden, wodurch keine Diskontinuität beim Spinnen auftritt.

Wird andererseits aus irgendwelchen Gründen die Spinndüse 5 gewechselt, wofür der Strom an Celluloselösung zur Spinndüse 7 naturgemäß gestoppt werden muß, so kann die erfindungsgemäße Vorrichtung 7 diejenige Menge an Celluloselösung aufnehmen, welche in der Zeitspanne, in welcher der Strom an Celluloselösung unterbrochen ist, vom Filmtruder 3 abgegeben wurde. Der Betrieb des Fimtruders braucht somit nicht unterbrochen werden, wodurch keine Diskontinuität in der Qualität der Celluloselösung auftritt.

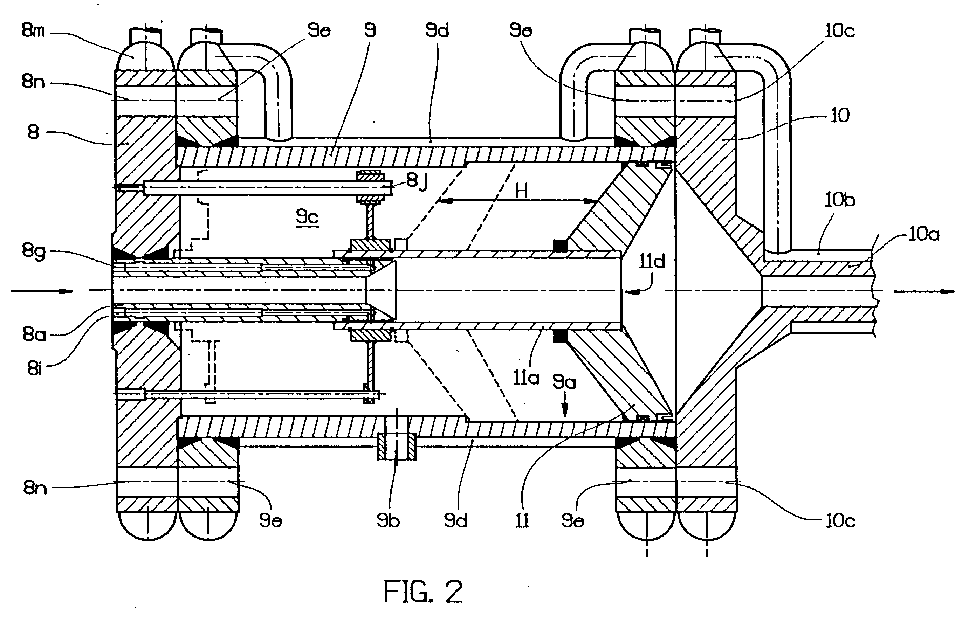

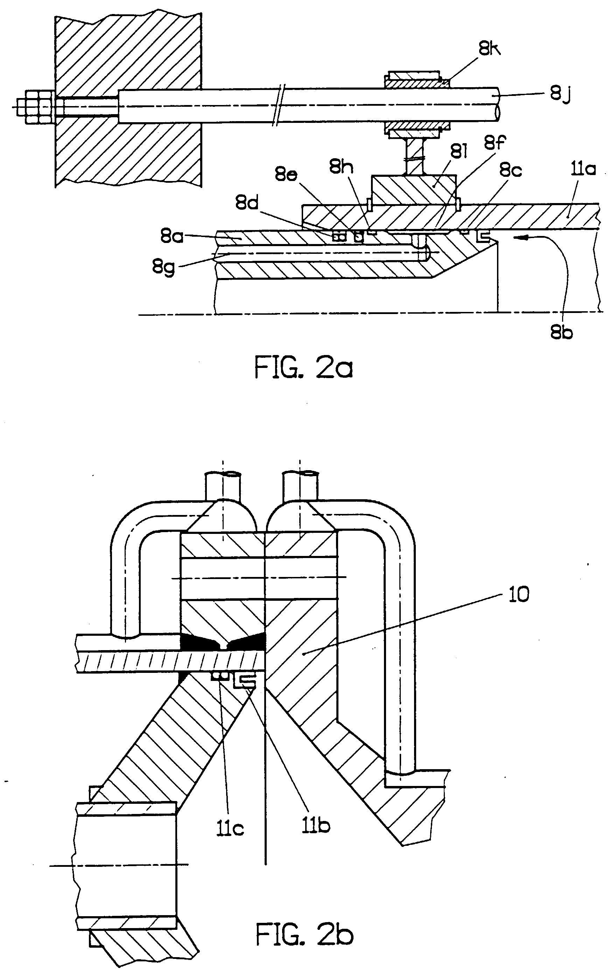

Der genaue Aufbau der erfindungsgemäßen Vorrichtung 7 und ihre Funktionsweise werden nun an Hand der Figur 2 detailliert beschrieben.

Figur 2 zeigt einen Schnitt der erfindungsgemäßen Vorrichtung in ihrer einfachsten Ausführungsform. Sie besteht im wesentlichen aus 4 Elementen: den beiden Deckelflanschen 8 und 10, dem zylindrischen Führungsrohr 9 und dem Kolben 11, der im Führungsrohr verschiebbar gelagert ist. Der maximale Hub und die Bewegungsrichtung des Kolbens 11 sind mit dem Buchstaben H bzw. mit einem Doppelpfeil angedeutet. In der Figur 2 ist der Kolben 11 in seiner äußerst rechten Position gezeichnet. Diese Position wird im folgenden als Minimumposition bezeichnet, da in diesem Fall nur ein Minimum an Celluloselösung in der erfindungsgemäßen Vorrichtung Platz findet. Wird der Kolben 11 um den Hub H nach links bewegt, befindet er sich in der Maximalposition, da in diesem Fall ein Maximum an Celluloselösung in der erfindungsgemäßen Vorrichtung enthalten ist. Diese Maximalposition des Kolbens 11 ist in der Figur 2 strichliert angedeutet.

Der Kolben 11 weist eine Aufnahmehülse 11a auf, die über ein Einleitrohr 8a, welches am Deckelflansch 8 befestigt ist, gestülpt ist und bei einer Bewegung des Kolbens 11 in Richtung Maximalstellung in zunehmendem Ausmaß teleskopartig über das Einleitrohr 8a geschoben wird. Der Kolben 11 wird daher bei seiner Bewegung nicht nur von der zylindrischen Wand 9a des Führungsrohres 9, sondern auch vom Einleitrohr 8a des Deckelflansches 8 geführt.

Die Funktion der erfindungsgemäßen Vorrichtung ist nun wie folgt:

Celluloselösung strömt z.B. aus dem in Figur 1 dargestellten Anlagenteil 6 durch das Einleitrohr 8a, das an seinem Ende eine konische Erweiterung besitzt, durch die Aufnahmehülse 11a und verläßt die erfindungsgemäße Vorrichtung durch das Abgaberohr 10a, welches am Deckelflansch 10 befestigt ist und direkt zur Spinndüse (nicht dargestellt) führt. Muß nun bei einem Wechsel der Spinndüse die Abgabe von Celluloselösung aus dem Abgaberohr 10a gestoppt werden, würde der Druck der weiter kontinuierlich durch das Einleitrohr 8a in die erfindungsgemäße Vorrichtung nachströmenden Celluloselösung ansteigen. Dieser Druckanstieg wird jedoch kompensiert, indem der Kolben 11 entsprechend der Menge der einströmenden Celluloselösung nach links in Richtung Maximalstellung verschoben wird. Durch diese Maßnahme wird somit Raum für die während des Spinndüsenwechsels in die erfindungsgemäße Vorrichtung einströmende Celluloselösung geschaffen. Ist die neue Spinndüse betriebsbereit, wird das Abgaberohr 10a wieder geöffnet und gleichzeitig die Bewegung des Kolbens 11 gestoppt, wodurch der Spinnbetrieb wieder aufgenommen wird, da Celluloselösung wieder kontinuierlich vom Abgaberohr 10a an die Spinndüse abgegeben wird. Die während des Stillstandes des Spinnbetriebes von der erfindungsgemäßen Vorrichtung in ihrem Führungsrohr 9 aufgenommene Celluloselösung kann durch Bewegen in Richtung Minimalposition zusätzlich an die Spinndüse abgegeben werden, was zweckmäßigerweise über einen längeren Zeitraum geschieht, um den Druck und die Ausstoßmenge an der Spinndüse nicht wesentlich zu erhöhen.

Muß andererseits aus irgendeinem Grund der Zustrom von Celluloselösung in das Einleitrohr 8a verringert werden, so wird zuerst ein Vorrat an Celluloselösung in die erfindungsgemäße Vorrichtung aufgenommen, indem der Kolben 11 in seine Maximalposition bewegt wird, wodurch Raum für diesen Vorrat an Celluloselösung geschaffen wird. Wird dann der Zustrom an Celluloselösung in das Einleitrohr 8a verringert, weil z.B. Celluloselösung für andere Zwecke (z.B. zum Rückspülen eines Filters) abgezweigt wird, kann verhindert werden, daß ein dadurch hervorgerufener Druckabfall in der Celluloselösung zur Spinndüse durchschlägt, indem der Kolben 11 mit entsprechender Geschwindigkeit in Richtung Minimalposition bewegt wird, wodurch Celluloselösung verstärkt durch das Abgaberohr 10a zur Spinndüse transportiert wird.

In einem Betriebszustand, in welchem mit der erfindungsgemäßen Vorrichtung sofort auf Druckschwankungen nach oben und nach unten reagiert werden soll, befindet sich der Kolben 11 vorzugsweise in einer Position zwischen der Minimalposition und der Maximalposition. In dieser Position kann ein plötzlich auftretender Druckabfall im Einleitungsrohr 8a durch Bewegen des Kolbens 11 in Richtung Minimalstellung sofort kompensiert werden. Wesentlich dabei ist, daß die zur Kompensation des Druckabfalls notwendige Menge Celluloselösung nicht aus einem "toten" Vorratsraum stammt, wie dies bei der AT-B - 397 043 der Fall ist, sondern aus einem ständig durchströmten Raum, in welchem die Celluloselösung immer wieder erneuert wird und somit nicht altert.

Ein im Ableitungsrohr 10a plötzlich auftretender Druckanstieg kann durch sofortiges Bewegen des Kolbens in Richtung Maximalstellung abgefangen werden.

Nachfolgend werden einzelne Konstruktionsmerkmale der erfindungsgemäßem Vorrichtung näher beschrieben.

Die Bewegung des Kolbens 11 wird mittels eines inerten Gases oder mittels eines Hydrauliköls gesteuert, welches an der Gasöffnung 9b des Führungsrohres 9 in den Druckraum 9c gespeist wird. Soll der Kolben 11 in Richtung Minimalstellung bewegt werden, so muß der Gasdruck im Druckraum 9c höher sein als jener Druck, der in der Celluloselösung herrscht. Umgekehrt kann der Kolben 11 in Richtung Maximalstellung bewegt werden, wenn der Gasdruck unter den Druck der Celluloselösung abgesenkt wird. Zweckmäßigerweise wird der Gasdruck stufenlos geregelt, wodurch auch der Kolben 11 stufenlos bewegt werden kann. Die Einstellung des Gasdruckes kann auf bekannte Weise z.B. mit einem Gaswindkessel erfolgen und ist in der Figur 2 nicht dargestellt.

Die Abdichtung des Druckraums 9c gegen die Celluloselösung in der Aufnahmehülse 11a ist in der Figur 2a im Detail vergrößert dargestellt und besteht aus einem Dichtring 8d, der in das Einleitrohr 8a eingepaßt ist, und einem Abstreifring 8e, der dafür sorgt, daß der Dichtring 8d nicht verunreinigt wird. Hinter dem Abstreifring 8e ist ein Führungsring 8h in das Einleitrohr 8a eingepaßt.

Die Abdichtung der Celluloselösung gegen den Druckraum 9c ist ebenfalls in der Figur 2a im Detail ersichtlich und besteht aus einem Dichtring 8b mit U-förmigem Querschnitt, der das Austreten von Celluloselösung in den Druckraum 9c verhindert. Unmittelbar hinter dem Dichtring 8b befindet sich ein Führungsring 8c zur Führung der Aufnahmehülse 11a am Einleitrohr 8a.

Der Raum 8f zwischen den Führungsringen 8c und 8h sowie der Aufnahmehülse 11a und dem Einleitrohr 8a ist für Spülungs- und Schmierzwecke vorgesehen und wird über den Schmierkanal 8g mit Schmiermittel gespeist. Das Schmiermittel wird über den Kanal 8i (siehe Fig. 2) abgezogen.

Die Abdichtung der Celluloselösung gegen den Druckraum 9c am Kolben 11 ist in der Figur 2b vergrößert dargestellt und erfolgt ebenfalls mittels eines Dichtringes llb mit U-förmigem Querschnitt. Dahinter ist ein Führungsring 11c eingepaßt. Die Abdichtung des Druckraums 9c gegen die Celluloselösung ist in der Fig. 2b nicht dargestellt und ist zweckmäßigerweise analog der in Figur 2a dargestellten Situation (Dichtring 8d, Abstreifring 8e und Führungsring 8h) ausgeführt.

Zur Abdichtung des Druckraums 9c und der Celluloselösung gegen die Umgebung sind in den Deckelflanschen 8 und 10 in bekannter Weise O-Dichtungen vorgesehen.

Die Stellung des Kolbens 11 innerhalb der erfindungsgemäßen Vorrichtung kann auf bekannte Weise z.B. mittels eines transsonaren Wegaufnehmers 8j (Fig. 2a) des Typus BALLUF BTL (Hersteller: Fa. Balluf, Deutschland) ermittelt werden, welche im Deckelflansch 8 befestigt ist. Der Positionsgeber 8k ist über einen Ring 81 an der Aufnahmehülse 11a befestigt und erkennt somit jede Position der Aufnahmehülse 11a zwischen der Minimalposition und der Maximalposition des Kolbens 11. Das vom transsonaren Wegaufnehmer 8j gelieferte Signal kann als Steuersignal vielfältig verwendet werden.

Die beiden Deckelflansche 8 und 10 und das Führungsrohr 9 weisen jeweils Heizmäntel 8m, 10b bzw. 9d auf, über welche sie indirekt von außen beheizt werden können.

Die feste Verbindung der Deckelflansche 8 und 10 am Führungsrohr 9 wird in bekannter Weise mittels Schrauben hergestellt, welche durch die Bohrungen 8n, 10c bzw. 9e geführt werden.

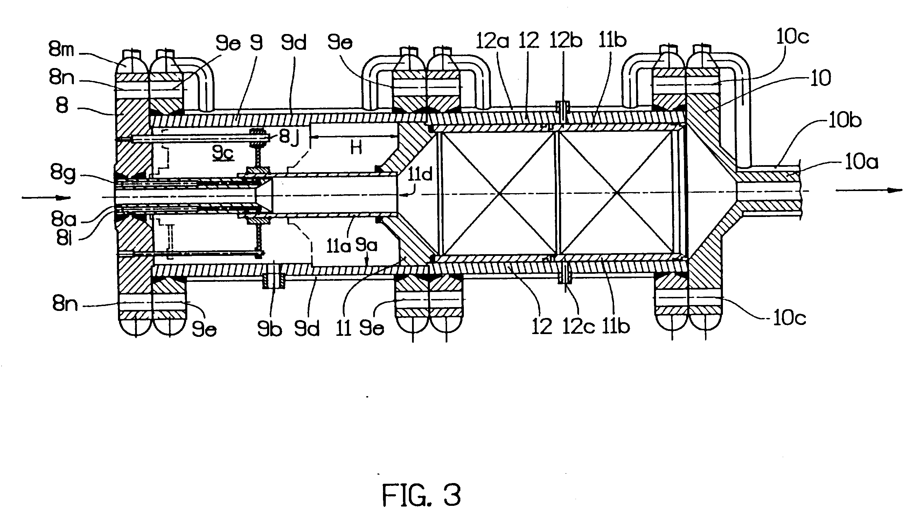

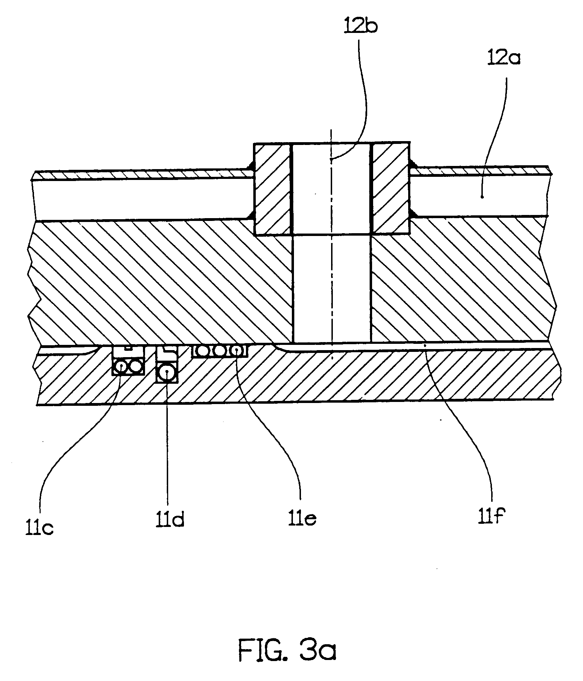

Eine bevorzugte Ausführungsform der erfindungsgemäßen Vorrichtung ist in der Figur 3 im Schnitt dargestellt, in welcher Vorrichtungsteile, die auch in den Figuren 2, 2a und 2b aufscheinen, mit gleichen Bezugszeichen benannt wurden.

Die in Figur 3 dargestellte Ausführungsform unterscheidet sich von jener in Figur 2 dargestellten durch ein weiteres (zweites) Führungsrohr 12, welches zwischen den Deckelflansch 10 und das Führungsrohr 9 der Figur 2 geschaltet ist, und durch einen Statikmischer 11b, welcher am Umfang des Kolbens 11 angeschweißt ist und sich mit dem Kolben 11 bewegt. Dieser Statikmischer ist ein Rohr, in welchem Einbauten vorgesehen sind, welche die Strömung der Celluloselösung derart beeinflussen, daß sie im wesentlichen kein Profil aufweist, d.h. pfropfenförmig strömt. Derartige Statikmischerelemente sind bekannt und werden z.B. von der Firma Sulzer Chemtech, Schweiz, hergestellt. In der Figur sind die Einbauten mittels 2 Kreuzen symbolisiert.

Der Statikmischer 11b taucht in der in Figur 3 dargestellten Minimumposition des Kolbens 11 vollständig in das zweite Führungsrohr 12 ein und schließt in dieser Position mit dem Deckelflansch 10 bündig ab. Die Abdichtung der Celluloselösung zum Druckraum 9c am vorderen Ende des Statikmischers ist prinzipiell analog zu der in Fig. 2b dargestellten Abdichtung am Kolben 11 ausgeführt, d.h. mit einem im Querschnitt U-förmigen Dichtring, an den sich ein Führungsring anschließt (beide nicht dargestellt).

Die Abdichtung des Druckraumes 9c zur Celluloselösung wird am äußeren Umfang des Statikmischers 11b mittels eines Dichtrings 11c vorgenommen und ist in der Figur 3a vergrößert dargestellt. Auch hier ist unmittelbar hinter dem Dichtring 11c ein Abstreifring 11d zum Schutz des Dichtrings llc gegen Verschmutzung eingepaßt. Über den dahinter angebrachten Führungsring 11e wird der Statikmischer 11b im zweiten Fürhungsrohr 12 geführt. Der Raum 11f ist für Schmierzwecke vorgesehen, wobei die Zufuhr und Abfuhr von Schmiermittel über die Öffnungen 12b bzw. 12c erfolgt.

Über den Heizmantel 12a kann der Statikmischer von außen indirekt beheizt werden.

Es hat sich gezeigt, daß der Einbau eines Statikmischers in die erfindungsgemäße Vorrichtung speziell bei der Verarbeitung der thermisch instabilen Celluloselösungen zur Erzielung einer guten Pfropfenströmung mit kleiner Verweilzeit von Vorteil ist. Vorteilhaft ist weiters die Verwendung von Statikmischer, deren Einbauten mit Heizmedium/Kühlmedium versorgt werden können, wodurch die strömende Celluloselösung zusätzlich beheizbar/kühlbar ist.

## Patentansprüche

1. Vorrichtung zum Regeln des Drucks in einer strömenden, viskosen Masse, mit
- einem Einlaß (8a), durch welchen die Masse in die Vorrichtung strömt,
- einem Führungselement (9, 12), welches eine Aufnahmekapazität für die aus dem Einlaß (8a) einströmende Masse besitzt,
- einem Kolben (11), welcher eine Öffnung (11d) aufweist und im Führungselement (9, 12) beweglich gelagert ist, wobei die Aufnahmekapazität des Führungselementes (9, 12) mit der Bewegung des Kolbens (11) verändert wird,
- einer Aufnahme (11a), welche an der Öffnung (11d) am Kolben (11) befestigt ist und welche mit dem Einlaß (8a) verbunden ist, sodaß die strömende Masse vom Einlaß (8a) über die Aufnahme (11a) und durch die Öffnung (11d) des Kolbens (11) in das Führungselement (9, 12) gelangt,
- einem Auslaß (10a), in welchen das Führungselement (9, 12) mündet und mit welchem die strömende Masse aus der Vorrichtung abgegeben wird,
mit der Maßgabe, daß der Einlaß (8a), das Führungselement (9, 12) und die Aufnahme (11a) rohrförmig ausgebildet sind dadurch gekennzeichnet, daß sich die Aufnahme (11a) bei der Bewegung des Kolbens (11) teleskopartig über den Einlaß (8a) schiebt.

2. Vorrichtung nach Anspruch 1, dadurch gekennzeichnet, daß der Kolben (11) mit einem Statikmischer (11b) verbunden ist, welcher im Führungselement (12) beweglich gelagert ist und sich zusammen mit dem Kolben (11) bewegt.

3. Vorrichtung nach einem der Ansprüche 1 oder 2, dadurch gekennzeichnet, daß das Führungselement (9) einen Druckraum (9c) aufweist, in welchen über eine Öffnung (9b) ein Fluid gespeist werden kann, welches unter Druck steht und den Kolben (11) bewegen kann.

4. Verwendung einer Vorrichtung nach einem oder mehreren der Ansprüche 1 bis 3 in einer Anlage zur Herstellung formbarer Celluloselösungen.

5. Verwendung nach Anspruch 4, dadurch gekennzeichnet, daß als formbare Celluloselösung eine Lösung von Cellulose in einem wässerigen tertiären Aminoxid eingesetzt wird.

6. Anlage zur Herstellung formbarer Lösungen von Cellulose in wässerigen tertiären Aminoxiden, gekennzeichnet durch die Kombination
- eines Dünnschichtbehandlungsapparats (3), in welchem unter Anwendung der Dünnschichttechnik bei erhöhter Temperatur und bei verringertem Druck aus einer Suspension von Cellulose in einem wässerigen tertiären Aminoxid so lange Wasser abgedampft wird, bis eine Celluloselösung entstanden ist, welche aus dem Dünnschichtbehandlungsapparat (3) ausgetragen wird, mit
- einer Vorrichtung (7) nach einem der Ansprüche 1 bis 3, welche mit dem Dünnschichtbehandlungsapparat (3) entweder direkt oder indirekt leitungsmäßig verbunden ist.

7. Anlage zur Herstellung cellulosischer Formkörper, nach Anspruch 6, umfassend
- einen Mischer (1), in welchem aus zerkleinerter Cellulose und einer wässerigen Lösung eines tertiären Aminoxids eine Suspension gebildet wird,
- einen Dünnschichtbehandlungsapparat (3), welcher mit dem Mischer (1) leitungsmäßig verbunden ist,
- ein Formwerkzeug (5), welches an die Vorrichtung (7) nach einem der Ansprüche 1 bis 3 leitungsmäßig verbunden ist.

## Claims

1. A device for controlling pressure in a flowing viscous mass comprising:
- an inlet (8a) through which the mass flows into the device,
- a guiding element (9, 12) having a receiving capacity for the mass flowing from said inlet (8a),
- a piston (11) having an aperture (11d), which piston is movable within said guiding element (9, 12), the receiving capacity of said guiding element (9, 12) being varied by moving said piston (11),
- a receptacle (11a) attached to said aperture (11d) at said piston (11) and joined to said inlet (8a) such that the flowing mass passes from said inlet (8a) through said receptacle (11a) and through said aperture (11d) of piston (11) into said guiding element (9, 12),
- an outlet (10a) into which said guiding element (9, 12) leads and whereby the flowing mass is discharged from the device,
provided that said inlet (8a), said guiding element (9, 12) and said receptacle (11a) are designed in a pipe-shape,
characterized in that said receptacle (11a) slides over said inlet (8a) like a telescope when said piston (11) is moving.

2. A device according to Claim 1, characterized in that said piston (11) ist joined to a static mixer (11b) being movable within said guiding element (12) and moving together with said piston (11).

3. A device according to one of the claims 1 or 2, characterized in that said guiding element (9) has a pressure chamber (9c) wherein through an aperture (9b) a fluid may be fed being able to move said piston (11).

4. The use of a device according to one or more of the claims 1 to 3 in an arrangement for the production of mouldable cellulose solutions.

5. The use according to Claim 4, characterized in that as a mouldable cellulose solution a solution of cellulose in an aqueous tertiary amine-oxide is used.

6. An arrangement for the production of mouldable solutions of cellulose in aqueous tertiary amine-oxides,
characterized by the combination of
- a thin film treatment apparatus (3) wherein by using the thin-film technique water is evaporated from the suspension at elevated temperature and reduced pressure until a cellulose solution is produced, which is removed from said thin film treatment apparatus (3), and
- a device (7) according to one of the claims 1 to 3 joined to said thin film treatment apparatus (3) either directly or indirectly by means of a pipe.

7. An arrangement according to claim 6 for the production of cellulose moulded bodies comprising:
- a mixer (1) wherein a suspension is produced from shredded cellulose and an aqueous tertiary amine-oxide,
- a thin film treatment apparatus (3) joined to said mixer (1) by means of a pipe,
- a forming tool (5) joined to said device (7) according to one of the claims 1 to 3 by means of a pipe .

## Revendications

1. Dispositif pour réguler la pression dans une masse visqueuse qui s'écoule, comportant:
une entrée (8a), par laquelle la masse s'écoule dans le dispositif,
- un élément de guidage (9, 12) qui possède une capacité de réception pour la masse qui pénètre en s'écoulant depuis l'entrée (8a),
- un piston (11) qui présente une ouverture (11d) et qui est placé, mobile, dans l'élément de guidage (9, 12), la capacité de réception de l'élément de guidage (9, 12) se modifiant avec le mouvement du piston (11),
- un réceptacle (11a) qui est fixé au piston (11), à l'ouverture (11d), et qui est relié à l'entrée (8a), de sorte que la masse qui s'écoule depuis l'entrée (8a) parvient dans l'élément de guidage (9, 12) en passant par le réceptacle (11a) et par l'ouverture (11d) du piston (11),
- une sortie (10a) dans laquelle l'élément de guidage (9, 12) débouche et par laquelle la masse qui s'écoule est évacuée hors du dispositif, avec la réserve que l'entrée (8a), l'élément de guidage (9, 12) et le réceptacle (11a) sont de forme tubulaire, caractérisé par le fait que, lors du mouvement du piston (11), le réceptacle (11a) coulisse télescopiquement le long de l'entrée (8a).

2. Dispositif selon la revendication 1, caractérisé par le fait que le piston (11) est relié à un mélangeur statique (11b) qui est porté, mobile, dans l'élément de guidage (12) et se déplace avec le piston (11).

3. Dispositif selon l'une des revendications 1 ou 2, caractérisé par le fait que l'élément de guidage (9) présente un espace sous prcssion (9c) dans lequel on peut envoyer, par une ouverture (9b), un fluide qui est sous pression et peut déplacer le piston (11).

4. Emploi d'un dispositif selon une ou plusieurs des revendications 1 à 3, dans une installation de fabrication de solutions de cellulose pouvant être mises en forme.

5. Emploi selon la revendication 4, caractérisé par le fait que comme solution de cellulose pouvant être mise en forme on emploie une solution de cellulose dans un oxyde d'amine tertiaire aqueux.

6. Installation pour la fabrication de solutions, pouvant être mises en forme, de cellulose dans des oxydes d'amine tertiaire aqueux, caractérisée par la combinaison
- d'un appareil de traitement en couche mince (3) dans lequel, en employant la technique des couches minces avec élévation de la température et diminution de la pression, on extrait, par vaporisation, d'une suspension de cellulose dans un oxyde d'amine tertiaire aqueux, suffisamment d'eau pour faire apparaître une solution de cellulose qui s'évacue hors de l'appareil de traitement en couche mince (3), avec
- un dispositif (7) selon l'une des revendications 1 à 3, qui est relié, soit directement, soit indirectement par une conduite, avec l'appareil de traitement en couche mince (3).

7. Installation de fabrication d'objets cellulosiques de forme, selon la revendication 6, comportant
- un mélangeur (1) dans lequel on forme une suspension à partir de cellulose broyée et d'une solution aqueuse d'un oxyde d'amine tertiaire,
- un appareil de traitement en couche mince (3) qui est relié par une conduite au mélangeur (1)
- un outil de mise en forme (5) qui est relié par une conduite au dispositif (7) conforme à l'une des revendications 1 à 3.
